# FASCICULE DE BREVET EUROPEEN

(11) **EP 2 264 399 B1**
(45) Date de publication et mention de la délivrance du brevet: **30.05.2012**
(21) Numéro de dépôt: 09163294.3
(22) Date de dépôt: 19.06.2009
(51) Int. Cl.: G01C 5/06, G01L 7/08, G04G 21/02

(54) **Capteur de pression à diaphragme et profondimètre comportant un tel capteur**
Drucksensor mit Membran und Tiefenmessgerät, das einen solchen Sensor umfasst
Pressure sensor with diaphragm and depth gauge incorporating such sensor

(43) Date de publication de la demande: 22.12.2010
(73) Titulaire: The Swatch Group Research and Development Ltd., 2074 Marin (CH)
(72) Inventeur: Rebeaud, Nicolas, 1052, Le Mont-Sur-Lausanne (CH)
(74) Mandataire: Ravenel, Thierry Gérard Louis

(56) Documents cités:
- DE-A1- 19 724 293
- US-A- 3 651 693
- US-A- 5 442 962

## Description

### Arrière-plan de l'invention

La présente invention concerne un capteur de pression comportant un corps pourvu d'une chambre destinée à recevoir un fluide sous pression et d'un élément d'appui autour de ladite chambre, un couvercle fixé au corps et pourvu d'une bande de butée ayant un contour fermé en correspondance de l'élément d'appui du corps, un diaphragme disposé entre le corps et le couvercle pour obturer de manière étanche la chambre de pression et capable de fléchir sous l'effet d'une différence de pression entre ses deux faces, une région périphérique du diaphragme étant disposée entre ledit élément d'appui et ladite bande de butée, et des moyens de transmission liés à une région centrale du diaphragme pour transmettre une information de déflexion du diaphragme à des moyens de mesure ou d'indication. L'invention concerne également un profondimètre contenant un tel capteur de pression.

Dans les capteurs de pression utilisés en particulier dans les manomètres ou les profondimètres, le diaphragme (également appelé « membrane ») se présente habituellement sous la forme d'un disque métallique comportant des ondulations concentriques pour modifier l'amplitude de déflexion élastique. La fixation d'un tel diaphragme dans le capteur peut se faire par soudage (voir par exemple la demande de brevet DE 10147124), mais aussi sans soudage, par exemple par pincement comme on le voit dans la demande de brevet WO 01/01098. Toutefois, la fabrication de ces diaphragmes avec précision est assez compliquée et ne présente pas une bonne reproductibilité. En outre, il n'est pas facile d'empêcher que le diaphragme puisse subir des déformations plastiques dans le cas où le capteur serait soumis à une pression outrepassant la pression de service.

On a donc cherché à utiliser des diaphragmes plats, mais le mode de fixation continue de créer des inconvénients assez importants. Si l'on soude la région périphérique du diaphragme à la structure du capteur, cela diminue la déformation élastique que peut subir le diaphragme avant d'être déformé plastiquement, donc la sensibilité du capteur est réduite. En outre, le soudage introduit des caractéristiques de raideur différentes pour chaque soudure. Les imprécisions qui en résultent sur les déflexions du diaphragme réduisent évidemment la précision du capteur et, en outre, rendent difficile l'utilisation de butées empêchant des déformations plastiques du diaphragme. Une fixation par encastrement dans la structure du capteur présente également certains des inconvénients susmentionnés.

On mentionnera aussi la possibilité de donner à un diaphragme non soudé un profil en U large, avec une forme plate entourée d'un bord vertical qui coopère avec un joint d'étanchéité. Dans ce cas, le diaphragme est assez volumineux, son bord relevé n'est utile qu'à l'étanchéité, et surtout les coudes du U sont des zones où les contraintes dues à la pression du fluide se concentrent, limitant ainsi la déformation élastique que peut subir le diaphragme avant d'entrer dans le domaine plastique.

On connait également des documents US 3 651 693 et DE 197 24 293 des capteurs de pression comportant un diaphragme de forme sensiblement plane. Dans le document US 3 651 693, la zone périphérique du diaphragme peut pivoter sur une bande de butée lorsque le diaphragme fléchit sous l'effet de la pression. Dans le document DE19724293, un joint d'étanchéité est monté entre la région périphérique du diaphragme et le corps du capteur.

### Résumé de l'invention

La présente invention vise à créer un capteur de pression de construction simple, permettant au diaphragme de fléchir aussi librement que possible sous la pression du fluide tout en conservant une bonne étanchéité. Un but additionnel est d'éviter le risque de déformations plastiques du diaphragme dans toute la gamme des pressions que le capteur peut avoir à subir, même au-delà de la pression de service. Un autre but additionnel est de permettre une fabrication simple et un assemblage aisé du capteur.

A cet effet, il est prévu un capteur de pression tel que défini par la revendication 1 du brevet.

Grâce à ces particularités, le diaphragme peut présenter une déformation élastique plus importante pour une pression donnée que s'il était fixé par soudage ou encastrement de sa région périphérique. La déflexion accrue de sa région centrale facilite ainsi la transmission aux moyens de mesure ou d'indication. La suppression d'une fixation rigide permet de diminuer les imprécisions engendrées par la variabilité de ce type de fixation et donc d'améliorer la précision du capteur de pression. De plus, le diaphragme en forme de disque plat peut être fabriqué d'une manière simple et peu coûteuse, avec un niveau élevé de précision et de reproductibilité, par exemple à partir d'un découpage dans une feuille métallique.

De préférence, le diaphragme et la bande de butée sont circulaires, de sorte que la force d'appui du diaphragme est toujours uniforme le long du contour fermé de la bande de butée.

Selon un mode de réalisation particulièrement avantageux de l'invention, le couvercle présente, en regard du diaphragme, une surface d'arrêt située entre une ouverture centrale du couvercle et la bande de butée et conformée de façon à retenir le diaphragme dès que celui-ci a atteint une déflexion correspondant à une pression limite. Cela permet de soumettre le capteur à des pressions d'essai largement supérieures à la pression de service maximale, comme on l'expliquera plus loin, tout en utilisant un diaphragme assez flexible et conférant donc une bonne sensibilité au capteur de pression, sans aucun risque de déformation plastique du diaphragme.

D'autres particularités et avantages de l'invention apparaîtront ci-dessous dans la description du mode de réalisation, présenté à titre d'exemple non limitatif en référence aux dessins annexés.

### Description sommaire des dessins

La figure 1 est une vue frontale schématique d'un profondimètre pourvu d'un capteur de pression selon la présente invention.
La figure 2 est une vue schématique et partielle en coupe suivant la ligne II-II de la figure 1 et représente le mode de réalisation de l'invention.
La figure 3 est une vue agrandie du détail III de la figure 2.
La figure 4 est une vue analogue à la figure 3 et représente un autre exemple de réalisation du capteur.

### Description détaillée de divers modes de réalisation

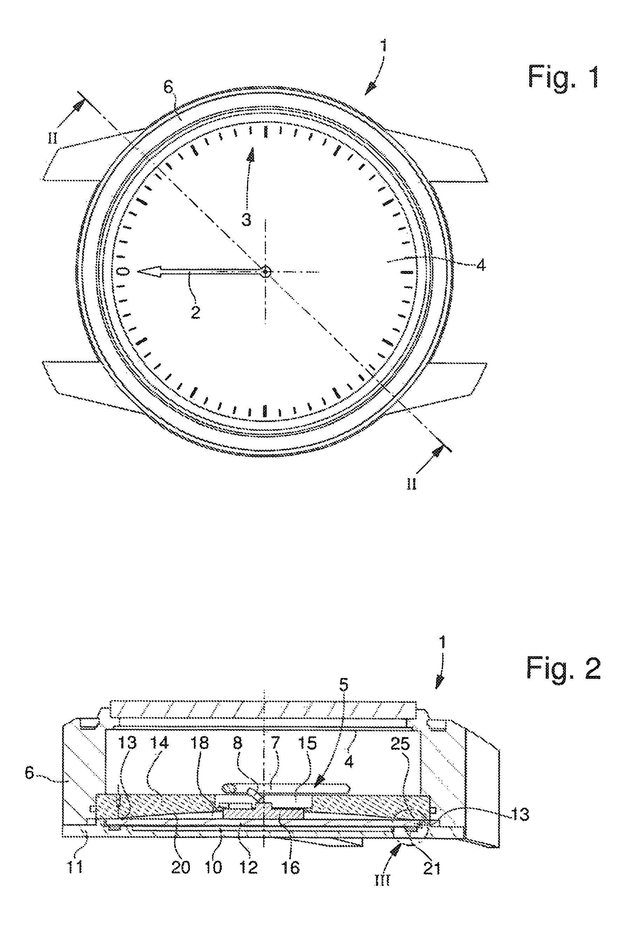

Les figures 1 à 3 représentent schématiquement un profondimètre 1, destiné à être porté au poignet d'un plongeur, grâce à un bracelet non représenté, et à indiquer la profondeur d'eau par une aiguille 2 tournant en regard d'une graduation 3 d'un cadran 4, à l'aide d'un capteur de pression 5 logé dans le boîtier 6 du profondimètre. Le capteur de pression est relié à l'aiguille 2 par une transmission mécanique comportant notamment un arbre rotatif 7 pourvu d'un palpeur latéral 8. On notera que le profondimètre 1 peut être combiné à une montre dans le même boîtier, mais ce n'est pas indispensable.

Le capteur de pression 5 est monté sur un fond 11 du boîtier, constituant en termes généraux un corps du capteur. Le capteur est disposé au-dessus d'une chambre de pression 10 formée dans le fond 11 et communiquant avec l'extérieur du boîtier par des orifices non représentés, de façon que le fluide contenu dans cette chambre soit soumis à la pression régnant autour du profondimètre. Le capteur de pression 5 comporte un diaphragme 12, de forme plate et circulaire, dont la région périphérique 13 est serrée entre le fond 11 et un couverte rigide 14 fixé dans le boîtier 6 et pourvu d'une ouverture centrale 15. Un ressort de rappel maintient l'extrémité libre du palpeur 8 en appui contre une pièce intercalaire 16 fixée sur la région centrale du diaphragme 12. La pièce intercalaire 16 peut se mouvoir verticalement dans l'ouverture 15 et faire ) ainsi pivoter l'arbre 7. Entre l'ouverture 15 et la région périphérique 13 du diaphragme, le couvercle présente une face inférieure légèrement concave qui délimite une chambre 18 communiquant avec le reste du volume intérieur du boîtier 6 par l'ouverture 15. Cette face concave constitue une surface d'arrêt 20 pour limiter la déflexion du diaphragme 12 dès que celui-ci est soumis à une pression différentielle dépassant une pression limite qui sera définie plus loin. Le volume intérieur du boîtier contient de l'air ou un autre gaz, à une pression proche de la pression atmosphérique au niveau de la mer. Un joint d'étanchéité 21, de préférence du type torique (O-ring), est comprimé contre la région périphérique 13 du diaphragme 12 et assure l'étanchéité dudit volume intérieur vis-à-vis de la chambre de pression 10. Il sert en outre d'élément d'appui pour presser constamment la région périphérique 13 du diaphragme contre le couvercle 14.

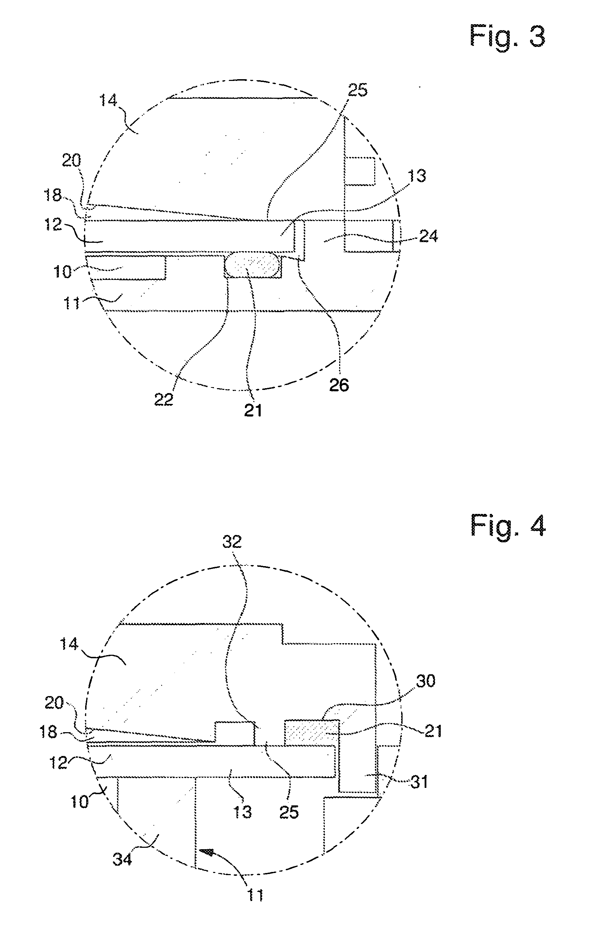

Comme on le voit mieux dans la figure 3, le joint torique 21 est logé dans une gorge circulaire 22 du fond 11. Un peu plus loin en direction radiale, le fond 11 présente un rebord vertical 24 qui bute contre le couvercle 14 et dont la hauteur est choisie de manière que le joint 21 soit fortement précontraint contre le diaphragme 12, pour garantir l'étanchéité entre eux dans toute la gamme des pressions de service du capteur de pression. La compression du joint 21 presse la région périphérique 13 du diaphragme contre une partie du couvercle 14, à savoir une bande d'appui 25 qui suit le pourtour de la surface d'arrêt concave 20 et se trouve pratiquement en face de la position du joint 21. La bande d'appui 25 est plane dans cet exemple, mais elle pourrait aussi avoir un profil transversal bombé ou en arête. Pour éviter une influence défavorable sur la capacité de déformation du diaphragme, la position du joint 21 constituant ici l'élément d'appui ne doit pas dépasser vers l'extérieur le contour fermé de la bande de butée 25.

Les déformations du diaphragme 12 doivent rester dans le domaine élastique dans toute la gamme des pressions auxquelles le capteur 5 sera soumis. De préférence, le diaphragme est métallique. Grâce à sa forme plane au repos, on peut le fabriquer facilement, par exemple par découpage dans une feuille d'acier inoxydable. Les autres éléments du capteur, hormis le joint 21, peuvent être réalisés en métal ou en matière synthétique rigide, par exemple.

Lorsque le profondimètre 1 est plongé à une certaine profondeur dans l'eau, le diaphragme 12 fléchit élastiquement sous la pression différentielle accrue entre les chambres 10 et 18. Le capteur de pression 5 détecte la déflexion du diaphragme par le mouvement vertical de la pièce intercalaire 16. La transmission mécanique entre le palpeur 8 et l'aiguille 2 est agencée pour produire un déplacement pratiquement linéaire de l'aiguille en fonction de la variation de pression.

La forme donnée à la surface d'arrêt 20 correspond au profil de la déformée du diaphragme 12 pour la pression limite mentionnée plus haut. Ce profil, théoriquement parabolique pour un diaphragme circulaire dont les déflexions sont petites, peut être approché par une forme de calotte sphérique, facile à usiner. De préférence, ladite pression limite est un peu supérieure à la pression de service maximale du profondimètre. Comme celui-ci doit généralement être soumis à une pression d'essai maximale largement supérieure à la pression de service maximale, le rôle principal de la surface d'arrêt 20 est d'éviter des déformations plastiques du diaphragme dans ces conditions d'essai, puisque le diaphragme est alors épaulé par le couvercle 14 qui est beaucoup plus rigide que lui. Seule la partie centrale du diaphragme en face de l'ouverture 15 subit un surcroît de flexion, mais les contraintes supplémentaires sont réduites et, avec un dimensionnement adéquat, peuvent rester dans le domaine élastique. Bien entendu, ces avantages existent aussi dans des cas où le capteur de pression subirait accidentellement une pression excessive, par exemple un coup de bélier dans un manomètre.

Étant donné que la région périphérique 13 du diaphragme n'est ni soudée ni encastrée dans la structure qui la supporte, elle peut pivoter quasi librement sur la bande d'appui 25 pour s'incliner et se rapprocher de la surface de butée 20. Dans l'agencement selon la figure 3, ce mouvement ne modifié pratiquement pas la force de compression du joint 21, donc l'étanchéité n'est pas affectée. Un dégagement 26 est ménagé entre le joint 21 et le rebord 24 pour permettre au bord du diaphragme de s'abaisser librement. En ce qui concerne le montage du capteur 5, on comprend aisément qu'il est particulièrement simple, notamment parce qu'il suffit d'insérer le couvercle 14 dans le boîtier 6, insérer le joint 21 dans la gorge 22, poser sur le joint le diaphragme 12 positionné latéralement par le rebord 24, puis fixer le fond 11 au boîtier de la manière habituelle. C'est la hauteur du rebord 24 qui détermine automatiquement la force de précontrainte du joint 21.

Selon un autre exemple de réalisation du capteur, représenté dans la figure 4, le diaphragme 12 et le mécanisme du profondimètre sont semblables à ceux de l'exemple des figures 1 à 3, mais le joint d'étanchéité 21 est placé contre la face supérieure du diaphragme 12, donc du côté du couvercle 14, dans une gorge circulaire 30 entre un rebord extérieur 31 et un rebord interne circulaire 32 du couvercle. La surface inférieure du rebord 32 constitue la bande de butée 25 contre laquelle la région périphérique 13 du diaphragme 12 s'appuie en permanence. Dans l'état de repos du capteur de pression, le diaphragme 12 est pressé contre la bande de butée 25 par un élément d'appui 34 entourant la chambre de pression 10 et faisant partie du fond 11 ou solidaire de celui-ci. L'élément d'appui 34 a un tracé circulaire, de diamètre un peu inférieur à celui de la bande de butée 25 afin de précontraindre élastiquement le diaphragme 12 contre cette bande. En outre, la poussée de l'élément d'appui 34 sur le diaphragme comprime le joint 21 (qui peut aussi être de forme torique dans cet exemple) avec une forte précontrainte, supérieure à celle nécessaire à la pression de service maximale. Cette précontrainte est produite par la fixation du fond 11 au boîtier 6.

Comme dans l'exemple précédent, l'agencement selon la figure 4 permet une libre déformation du diaphragme 12 dans la gamme des pressions de service, et ensuite un soutien du diaphragme par la surface d'arrêt 20 du couvercle lorsque la pression limite susmentionnée est dépassée. Le pivotement de la région périphérique 13 du diaphragme sur la bande de butée 25 s'accompagne d'une légère diminution de compression du joint 21, mais sans perte d'étanchéité grâce à la forte précontrainte initiale du joint. En variante, on pourrait placer le joint 21 le long du côté intérieur (donc à gauche selon la figure 4) du rebord 32, de sorte que la compression du joint augmenterait avec la pression extérieure, mais la flexion du diaphragme serait alors un peu réduite par la résistance due au joint.

Les exemples décrits ci-dessus montrent que l'invention permet de réaliser des capteurs de pression, notamment pour des profondimètres, capable de présenter une bonne précision grâce à un amplitude suffisante de déflexion élastique du diaphragme et en évitant le risque de déformations plastiques. Ce but est atteint avec un diaphragme de fabrication simple avec une bonne reproductibilité, et de plus facile à monter tout en assurant une bonne étanchéité.

## Revendications

1. Capteur de pression (5) comportant un corps (11) pourvu d'une chambre de pression (10) destinée à recevoir un fluide et d'un élément d'appui (21, 34) autour de ladite chambre, un couvercle (14) fixé au corps et pourvu d'une bande de butée (25) ayant un contour fermé en correspondance de l'élément d'appui du corps, un diaphragme (12) disposé entre le corps et le couvercle pour obturer de manière étanche la chambre de pression et capable de fléchir sous l'effet d'une différence de pression entre ses deux faces, une région périphérique (13) du diaphragme étant disposée entre ledit élément d'appui et ladite bande de butée, et des moyens de transmission (7, 8, 16) liés à une région centrale du diaphragme pour transmettre une information de déflexion du diaphragme à des moyens de mesure ou d'indication (2), dans lequel le diaphragme (12) a une forme sensiblement plate et en ce que la région périphérique (13) du diaphragme peut pivoter sur la bande de butée (25) lorsque le diaphragme fléchit sous l'effet d'une augmentation de pression du fluide dans la chambre de pression (10), **caractérisé en ce que** ledit élément d'appui est un joint d'étanchéité (21) monté sur le corps (11) et comprimé entre le corps et la région périphérique (13) du diaphragme pour presser celle-ci en permanence contre la bande de butée (25), **en ce que** le joint d'étanchéité (21) est situé sensiblement à l'opposé de la bande de butée (25), et **en ce que** ledit joint ne dépasse pas vers l'extérieur le contour fermé de ladite bande de butée.

2. Capteur de pression selon la revendication 1, **caractérisé en ce que** le diaphragme (12) et la bande de butée (25) sont circulaires.

3. Capteur de pression selon la revendication 2, **caractérisé en ce que** le diaphragme (12) est formé par un disque métallique plan.

4. Capteur de pression selon l'une des revendications précédentes, **caractérisé en ce que** le couvercle (14) présente, en regard du diaphragme, une surface d'arrêt (20) située entre une ouverture centrale (15) du couvercle et la bande de butée (25) et conformée de façon à retenir le diaphragme dès que celui-ci a atteint une déflexion correspondant à une pression limite.

5. Capteur de pression selon la revendication 4, **caractérisé en ce que** la surface d'arrêt (20) a sensiblement la forme d'une calotte sphérique.

6. Profondimètre pourvu d'un boîtier (6) contenant un capteur de pression (5) selon l'une des revendications précédentes.

7. Profondimètre selon la revendication 6, **caractérisé en ce que** ledit corps du capteur de pression est formé par un fond (11) du boîtier (6).

## Claims

1. Pressure sensor (5) including a body (11) with a pressure chamber (10) for receiving a fluid and a support element (21, 34) around said chamber, a cover (14) secured to the body and provided with a stop strip (25) that has a closed contour in correspondence with the support element of the body, a diaphragm (12), which is arranged between the body and the cover to seal off the pressure chamber, and which is capable of bending under the effect of a pressure difference between the two surfaces thereof, with a peripheral region (13) of the diaphragm arranged between said support element and said stop strip, and transmission means (7, 8, 16), connected to a central region of the diaphragm for transmitting diaphragm deflection data to measuring or indicating means (2), wherein the diaphragm (12) has an approximately flat shape, wherein the peripheral region (13) of the diaphragm can pivot on the stop strip (25) when the diaphragm bends under the effect of an increase in fluid pressure in the pressure chamber (10), **characterized in that** said support element is a sealing gasket (21) mounted on the body (11) and compressed between the body and the peripheral region (13) of the diaphragm to press said peripheral region permanently against the stop strip (25), **in that** the sealing gasket (21) is located approximately opposite the stop strip (25) and **in that** said gasket does not protrude out warmly beyond the closed contour of said stop strip.

2. Pressure sensor according to claim 1, **characterized in that** the diaphragm (12) and the stop strip (25) are circular.

3. Pressure sensor according to claim 2, **characterized in that** the diaphragm (12) is formed by a flat metal disc.

4. Pressure sensor according to any of the preceding claims, **characterized in that**, opposite the diaphragm, the cover (14) has a stop surface (20) located between a central aperture (15) of the cover and the stop strip (25) and shaped in such a way as to retain the diaphragm as soon as the latter reaches a deflection corresponding to a limit pressure.

5. Pressure sensor according to claim 4, **characterized in that** the stop surface (20) has the approximate shape of a spherical cap.

6. Depth gauge with a case (6) containing a pressure sensor (5) according to any of the preceding claims.

7. Depth gauge according to claim 6, **characterized in that** said pressure sensor body is formed by a back cover (11) of the case (6).

## Patentansprüche

1. Drucksensor (5), der einen Körper (11), der mit einer Druckkammer (10), die dazu bestimmt ist, ein Fluid aufzunehmen, und mit einem Stützelement (21, 34) um die Kammer versehen ist, einen Deckel (14), der an dem Körper befestigt ist und mit einem Anschlagband (25) versehen ist, das einen geschlossenen Umriss entsprechend dem Stützelement des Körpers besitzt, eine Membran (12), die zwischen dem Körper und dem Deckel angeordnet ist, um die Druckkammer dicht zu verschließen, und die sich unter der Wirkung einer Druckdifferenz zwischen ihren beiden Flächen durchbiegen kann, wobei ein Umfangsbereich (13) der Membran zwischen dem Stützelement und dem Anschlagband angeordnet ist, und Übertragungsmittel (7, 8, 16), die mit einem Mittelbereich der Membran verbunden sind, um Biegeinformationen der Membran an Mess- oder Anzeigemittel (2) zu übertragen, umfasst, wobei die Membran (12) eine im Wesentlichen ebene Form besitzt und wobei der Umfangsbereich (13) der Membran an dem Anschlagband (25) schwenken kann, wenn sich die Membran unter der Wirkung eines Druckanstiegs des Fluids in der Druckkammer (10) biegt, **dadurch gekennzeichnet, dass** das Stützelement eine Dichtung (21) ist, die am Körper (11) angebracht ist und zwischen dem Körper und dem Umfangsbereich (13) der Membran komprimiert ist, um diese ständig gegen das Anschlagband (25) zu pressen, dass die Dichtung (21) sich im Wesentlichen gegenüber dem Anschlagband (25) befindet und dass die Dichtung nicht von dem geschlossenen Umriss des Anschlagbandes nach außen vorsteht.

2. Drucksensor nach Anspruch 1, **dadurch gekennzeichnet, dass** die Membran (12) und das Anschlagband (25) kreisförmig sind.

3. Drucksensor nach Anspruch 2, **dadurch gekennzeichnet, dass** die Membran (12) durch eine ebene Metallscheibe gebildet ist.

4. Drucksensor nach einem der vorhergehenden Ansprüche, **dadurch gekennzeichnet, dass** der Deckel (14) gegenüber der Membran eine Anschlagoberfläche (20) aufweist, die sich zwischen einer Mittelöffnung (15) des Deckels und dem Anschlagband (25) befindet und so geformt ist, dass sie die Membran aufhält, sobald diese eine einem Grenzdruck entsprechende Durchbiegung erreicht hat.

5. Drucksensor nach Anspruch 4, **dadurch gekennzeichnet, dass** die Anschlagoberfläche (20) im Wesentlichen die Form einer sphärischen Haube besitzt.

6. Tiefenmesser, der mit einem Gehäuse (6) versehen ist, das einen Drucksensor (5) nach einem der vorhergehenden Ansprüche enthält.

7. Tiefenmesser nach Anspruch 6, **dadurch gekennzeichnet, dass** der Körper des Drucksensors durch einen Boden (11) des Gehäuses (6) gebildet ist.
